# EUROPEAN PATENT SPECIFICATION

(11) **EP 0 742 600 B1**
(45) Date of publication and mention of the grant of the patent: **26.01.2000**
(21) Application number: 96302728.9
(22) Date of filing: 18.04.1996
(51) Int. Cl.: H01M 4/02, H01M 4/04, H01M 4/24, H01M 4/26, H01M 4/80

(54) **Electrodes for battery and method for fabricating the same**
Batterieelektroden und Verfahren zur Herstellung
Electrodes pour batterie et méthode de fabrication

(30) Priority: 09.10.1995 JP 26126795; 09.05.1995 JP 11044295
(43) Date of publication of application: 13.11.1996
(73) Proprietor: MATSUSHITA ELECTRIC INDUSTRIAL CO., LTD., Kadoma-shi, Osaka-fu, 571 (JP)
(72) Inventor: Matumura, Jun, Kamakura City, 247 (JP); Omura, Kuninori, Kamakura City, 247 (JP); Kasai, Chikara, Fujisawa City, 251 (JP); Yokoh, Sadaaki, Totsuka-ku, Yokohama City, 244 (JP); Mikuriya, Hitoshi, Chigasaki City, 253 (JP)
(74) Representative: Price, Paul Anthony King

(56) References cited:
- EP-A- 0 126 160
- EP-A- 0 301 647
- FR-A- 2 711 015
- US-A- 4 251 603
- CHEMICAL ABSTRACTS, vol. 107, no. 12, 21 September 1987 Columbus, Ohio, US; abstract no. 99797, KAIYA HIDEO ET AL: "Battery cathodes" XP002011511 & JP-A-62 140 359 (MATSUSHITA ELECTRIC INDUSTRIAL) 23 June 1987
- PATENT ABSTRACTS OF JAPAN vol. 007, no. 280 (E-216), 14 December 1983 & JP-A-58 161251 (NIHON DENCHI KK), 24 September 1983, & CHEMICAL ABSTRACTS, vol. 100, no. 12, 19 March 1984 Columbus, Ohio, US; abstract no. 88762, "Nickel-cadmium battery"
- PATENT ABSTRACTS OF JAPAN vol. 011, no. 367 (E-561), 28 November 1987 & JP-A-62 139256 (MATSUSHITA ELECTRIC IND), 22 June 1987,
- PATENT ABSTRACTS OF JAPAN vol. 008, no. 272 (E-284), 13 December 1984 & JP-A-59 143275 (SANYO DENKI KK), 16 August 1984, & CHEMICAL ABSTRACTS, vol. 102, no. 4, 28 January 1985 Columbus, Ohio, US; abstract no. 28464, "Cathodes for alkaline batteries"
- PATENT ABSTRACTS OF JAPAN vol. 011, no. 382 (E-564), 12 December 1987 & JP-A-62 147657 (FURUKAWA BATTERY CO LTD:THE), 1 July 1987,
- PATENT ABSTRACTS OF JAPAN vol. 004, no. 075 (E-013), 31 May 1980 & JP-A-55 041680 (MATSUSHITA ELECTRIC IND CO LTD), 24 March 1980,
- PATENT ABSTRACTS OF JAPAN vol. 017, no. 261 (E-1369), 21 May 1993 & JP-A-05 006762 (SHIN KOBE ELECTRIC MACH CO LTD), 14 January 1993,
- PATENT ABSTRACTS OF JAPAN vol. 005, no. 044 (E-050), 24 March 1981 & JP-A-55 166865 (MATSUSHITA ELECTRIC IND CO LTD), 26 December 1980,
- PATENT ABSTRACTS OF JAPAN vol. 009, no. 295 (E-360), 21 November 1985 & JP-A-60 133655 (MATSUSHITA DENKI SANGYO KK), 16 July 1985,
- PATENT ABSTRACTS OF JAPAN vol. 009, no. 069 (E-305), 29 March 1985 & JP-A-59 207560 (MATSUSHITA DENKI SANGYO KK), 24 November 1984,

## Description

The present invention relates to electrodes for a battery, such as a nickel electrode for an alkaline storage battery, and further relates to a method for fabricating the same.

Electrodes for a battery are roughly classified into three general groups: paste-type electrode, sintered-type electrode and pocket-type electrode. Recently, as a new method for fabricating the nickel electrode for the alkaline storage battery, a method for fabricating the paste-type electrode has been put to practical use and is now frequently used. The method comprises filling a pasty mixture (hereinafter referred to as "paste") composed essentially of an active material powder into spaces formed in a substrate such as a foamed metal or a nonwoven fabric of nickel fibers having three-dimensional communicating spaces.

Since such metal substrates have a porosity, i.e. the proportion occupied by the spaces in the total substrate, of as high as 95% and a maximal diameter of several hundreds µm for the spaces, it is possible to directly fill the active material powder or the paste into the spaces. As a result, these metal substrates can be finished into electrodes in a simple process.

Conventional practical and specific methods of filling the active material into the spaces of the metal substrate include a method of vibrating the paste, thereby to fill it into the spaces, a method of rubbing the paste to fill it into the spaces with a tool such as doctor knife, a method of contacting the paste with one face of the metal substrate while decompressing the other face so as to force the paste into the spaces, and a method of spraying the paste onto the spaces of the metal substrate through a nozzle.

Of these methods, the rubbing method and the spraying method are superior from the standpoint of uniformly filling the active material into the spaces of the metal substrate. A comparison of these two methods shows that the spraying method is superior to the rubbing method in view of the durability and easy and simple manipulation and maintenance of the device used for filling.

In spite of the above-mentioned excellence, the spraying method has such drawback that it is difficult to fill the paste uniformly into the spaces of the metal substrate such as a foamed porous metal substrate, for instance. That is, the spraying method comprises spraying the paste onto both faces of the foamed porous metal substrate at a certain rate while allowing the paste to spout out through nozzles to force it to be filled in the spaces of the substrate. Thus, this method has a drawback that a portion of the paste which has first entered the spaces near the surfaces of the substrate may sometimes be removed therefrom by an impinging action of the remaining portion of the paste which is subsequently sprayed. Another disadvantage is that the paste, which has impinged upon the surface of the metal substrate itself, may sometimes be sprung back therefrom.

Therefore, the spraying method is unsatisfactory from the standpoint of uniformly filling a preadjusted amount of the paste into the spaces of the porous metal substrate and leaves much to be improved. That is, it is strongly desired from the practical point of view to further decrease dispersion (scatter) in the filled amount of the paste, thereby to decrease the dispersion in the battery capacity.

JP-A-59-143275 discloses an electrode having a porous nickel substrate which is filled with a paste of active material and has one surface covered with a nickel film.

According to a first aspect of the present invention, there is provided an electrode for a battery, comprising:
a sheet of porous metal substrate having three-dimensional communicating spaces and a first principal face and a second principal face;
wherein said substrate has a higher porosity layer provided by most of said spaces and including said first principal face and a lower porosity layer provided by the remaining spaces and including said second principal face;
said lower porosity layer has a smaller thickness than said higher porosity layer;
said active material substantially fills said spaces of said higher porosity layer; and
said active material is not present at said second principal face of said lower porosity layer.

Preferably, the lower porosity layer contains substantially none of the active material and the proportion of metal in the lower porosity layer is larger than that of the higher porosity layer.

The porous metal substrate is preferably any of a foamed nickel, a nonwoven fabric made of nickel fibers or a sintered plaque of nickel powder.

It is preferable that the second principal face of the porous metal substrate is provided with a plurality of parallel grooves.

The electrode is preferably a nickel electrode for an alkaline storage battery.

According to a second aspect of the present invention, there is provided a method of fabricating an electrode for a battery, comprising the steps of:
providing a sheet or plate-like porous metal substrate having three-dimensional communicating spaces, a first principal face and a second principal face;
positioning a nozzle so as to directly face said first principal face of said porous metal substrate;
directing an active material into said three-dimensional communicating spaces of said porous metal substrate by allowing said active material to discharge from said nozzle while relatively moving one of said substrate and said nozzle with respect to the other;
regulating the discharging operation so that said active material penetrates said spaces but does not reach said second principal face of said porous metal substrate; and
pressing said porous metal substrate containing said active material so as to reduce its thickness.

Preferably, the active material is a pasty mixture, the porous metal substrate is belt like, and the relative movement between the substrate and the nozzle is produced by driving the belt-like porous metal substrate. Preferably, the distance between the porous metal substrate and the nozzle is maintained at 1.0mm or less. Preferably, the porous metal substrate has a plurality of grooves or cut-lines which extend in the longitudinal direction of the second principal face of the belt-like porous metal substrate.

It is also preferable that the pasty mixture contains water as a dispersing medium at a proportion of 20 - 30% by weight of the whole pasty mixture.

Non-limiting embodiments of the present invention will now be described with reference to the accompanying drawings, in which:-
FIG. 1 is a schematic perspective view showing a method for fabricating an electrode in accordance with the present invention;
FIG. 2 is a schematic view showing a method for fabricating an electrode of a conventional example;
FIG. 3 is a diagram showing a relationship between the distance between the porous metal substrate and the nozzle of the fabricating method in accordance with the present invention and the dispersion in the discharge capacity;
Fig. 4 is a diagram showing a relationship between the water content of the pasty mixture of the fabricating method in accordance with the present invention and the density of the discharge capacity;
FIG. 5 is a schematic perspective view showing another method for fabricating an electrode in accordance with the present invention; and
FIG. 6 is a partly-fragmented cross-sectional view showing an example of a rectangular battery in accordance with the present invention.

With the present invention, it is possible to effectively obviate the phenomenon that a portion of the paste which has first entered the spaces near the surface of the substrate may sometimes be removed therefrom by an impinging action of the remaining portion of the paste which is sprayed thereafter, by allowing the paste to spout out through the nozzle onto only one face of the porous metal substrate and not letting the paste penetrate through the spaces near the other face of the porous metal substrate. It is further possible to reduce the dispersion in the filled amount of the paste by adequately regulating the amount to be filled in the spaces of the porous metal substrate, thereby to produce an electrode having a favorable conductive network throughout an electrode plate and to increase the battery capacity.

By making the distance between the porous metal substrate and a nib of the nozzle placed in close proximity to one face of the porous metal substrate 1 mm or smaller during the operation of allowing the paste to spout out through the nozzle and filling it into the spaces of the porous metal substrate, it is also possible to decrease a possibility that the paste which has impinged upon the surface of the metal substrate itself may be sprung back therefrom, thereby to enable a stable supply of the paste and to reduce the dispersion in the filled amount of the paste. By reducing the water content of the paste appropriately, it is possible to increase the actual filling density of the active material powder in the spaces of the porous metal substrate, thereby to further increase the battery capacity.

### EXAMPLE 1

A paste was prepared by adding 10 parts by weight of nickel metal powder having a particle diameter of about 2 - 3 µm and 5 parts by weight of cobalt oxide powder having a particle diameter of about 2 - 3 µm to 100 parts by weight of nickel hydroxide having an average particle diameter of 10 µm, in their powder state, then adding water as a dispersing medium to the obtained mixture so that the proportion of the water in the whole paste was made 20% by weight and thereafter kneading the final mixture.

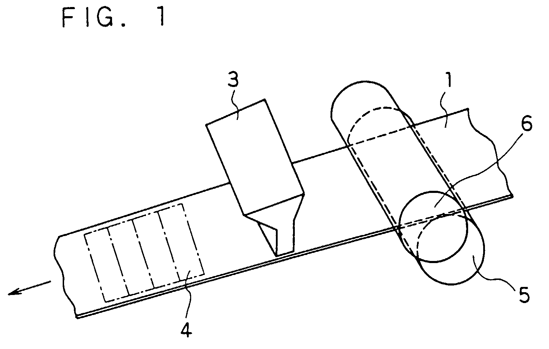

FIG. 1 schematically shows a mode of fabricating an electrode in accordance with the present invention. In FIG. 1, a spouting nozzle 3 is so provided that it faces one face of a belt-like foamed porous nickel substrate 1 having a width of 100 mm, a thickness of 2.5 mm, a porosity of 98% and a mean pore size of 200 µm, which correspond to the size of its three-dimensional communicating spaces. And the paste prepared in the above-mentioned manner was allowed to spout out through this nozzle 3, to be filled into the three-dimensional communicating spaces of the porous nickel substrate 1, while transferring the porous nickel substrate along its longitudinal direction. In this figure, numerals 5 and 6 designate rollers for transferring the porous nickel substrate.

During the filling process, a distance between the nib of the nozzle 3 and the porous metal substrate 1 was kept at 0.1 mm, and the amount of the paste spouting out through the nozzle 3 was maintained at a rate of 30 - 33 g/second. When filling the paste into the spaces of the porous nickel substrate, the transferring speed of the porous nickel substrate was so regulated as to allow the paste to penetrate the spaces from its one face of the porous metal substrate but not to reach up to the other face of the porous metal substrate 1. More specifically, the filling process was regulated in terms of the transferring speed of the porous nickel substrate so as to allow the paste to penetrate the spaces up to a part which corresponds to about 80% of the thickness of the porous metal substrate but not to reach the remaining 20% of the porous metal substrate. As a result, it was found that a preferable transferring speed of the porous metal substrate was 7 m/minute.

Although omitted in FIG. 1 for brevity, a belt or rotor for supporting the porous metal substrate was provided on the other face of the porous metal substrate 1 in order to maintain the distance between the nib of the nozzle 3 and the porous metal substrate 1 constant, even when a pressure was exerted on the porous metal substrate by an action of the spouted paste.

The porous metal substrate thus filled with the paste was then pressed to reduce its thickness to 1.0 mm. By this pressing process, the three-dimensional communicating spaces of the porous metal substrate were filled with the paste substantially completely. On the side of the face which had not faced the nozzle, the spaces of the porous metal substrate were crushed and narrowed, and the porosity of the porous metal substrate was reduced. As a result, the proportion of the metal structure occupying the substrate increased. The paste was not allowed to project from the surface of that side or to expose itself on the surface.

The above-mentioned porous metal substrate 1 filled with the paste was then cut into a rectangular sheet having a width of 35 mm and a length of 87 mm as indicated by the dot-dashed line in FIG. 1. A lead conductor was spot-welded on a predetermined point of the cut rectangular sheet 4 to produce an electrode plate "a". The amount of the active material filled in the electrode plate "a" ranged from 9 to 10 grams.

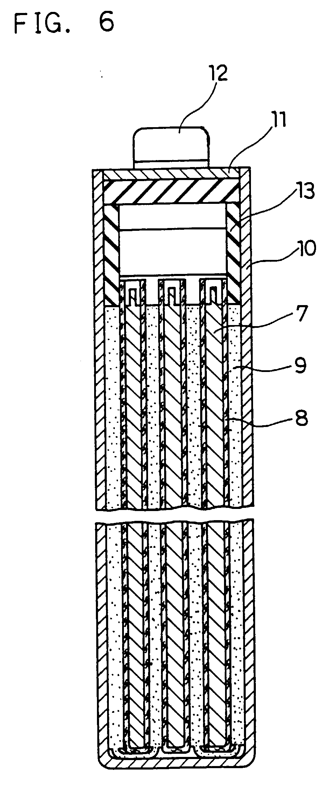

An electrode group was assembled with three sheets of nickel electrode 7 produced in the above-mentioned manner, known separators 8 which envelop each of the nickel electrodes in a U-shape fashion and two U-shaped bent sheets of metal hydride negative electrode 9 of a hydrogen storage alloy comprising misch metal and nickel. The assembled electrode group was then inserted into a battery housing 10. After a predetermined amount of an alkaline electrolyte was injected into the housing and an open end of the housing was sealed with a sealing plate 11, a rectangular nickel-metal hydride storage battery A was configured as shown in FIG. 6.

The battery housing 10 was made of nickel-plated steel and the sealing plate 11 was made of nickel-plated steel and welded on an open end of the battery housing 10. The sealing plate 11 was provided with a positive electrode terminal 12 which was insulated from the sealing plate 11 and a safety valve (not shown). The negative electrode 9 was connected to the battery housing 10 which serves as the negative electrode terminal.

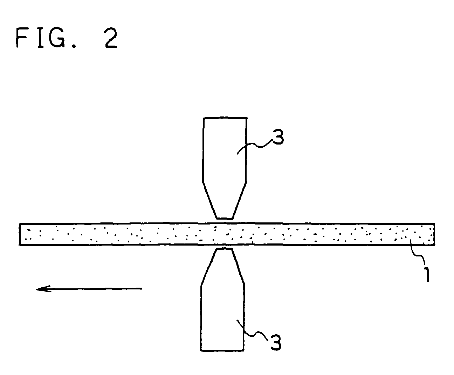

For comparison, Battery B was configured by generally following the above procedure except for the use of a nickel electrode "b" produced by a conventional paste-spraying process wherein a foamed nickel porous substrate 1 was filled with the paste by allowing the paste to spout out through two nozzles 3 placed on both sides of the moving porous substrate, to face both faces of the moving porous substrate as shown in FIG. 2.

100 examples of Battery A and 100 examples of Battery B were configured for being investigated with respect to their discharge capacities at 1C discharging. As a result, it was found that the battery capacity was from 1.80 Ah to 1.87 Ah for Battery A and from 1.80 Ah to 2.01 Ah for Battery B. This clearly indicates that the dispersion in the discharge capacity of Battery A is smaller than that of Battery B.

### EXAMPLE 2

A procedure similar to that in Example 1 was generally followed for producing a battery and measuring its discharge capacity, wherein the same belt-like porous nickel substrate, the same paste prescription, a similar filling process and the same battery production process as those in Example 1 were employed. In the filling process, however, the distance between the nib of the nozzle 3 and the porous metal substrate 1 was varied while maintaining the spouting rate of the paste through the nozzle 3 constant.

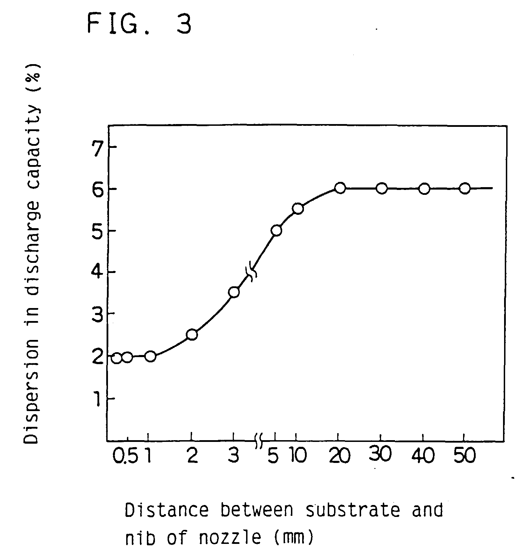

FIG. 3 is a diagram showing the relationship between the distance between the nib of the nozzle and the porous metal substrate, and the dispersion in the discharge capacity of the obtained battery. As clearly shown by this diagram, it was possible to stably supply the paste and to reduce the dispersion in the discharge capacity by maintaining the distance between the nib of the nozzle and the porous metal substrate 1.0 mm or smaller.

### EXAMPLE 3

Under the conditions identical with those in Example 1, except that the water content of the paste was changed from 20% to 50% by weight for the whole paste composition employed in Example 1, a belt-like porous nickel substrate was filled with the paste by allowing the paste to spout out through a nozzle placed close to one face of the substrate which was allowed to travel along its longitudinal direction.

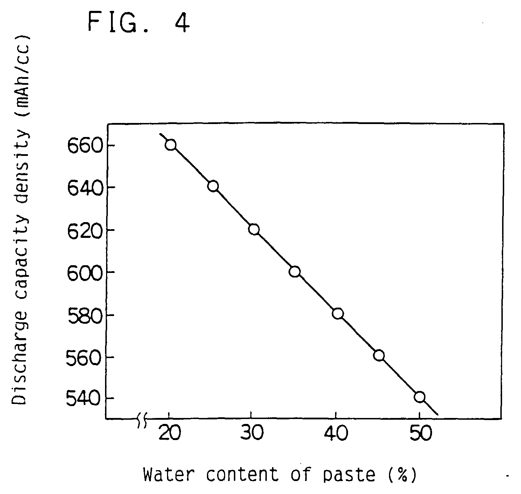

FIG. 4 is a diagram showing the relationship between the water content of the paste and the discharge capacity density of the obtained battery. As clearly shown by this diagram, it was possible to increase the discharge capacity density of the electrode by reducing the water content of the paste, namely, the former is inversely proportional to the latter.

In consideration of fluidity of the paste required for the passage through the nozzle, smoothness in the spouting operation of the paste through the nozzle, and the actual filled amount of the active material powder itself in the spaces of the porous substrate as a whole, it is concluded that the amount of water to be added to the paste as a dispersing medium is preferably from 20% to 30% by weight for the whole paste.

### EXAMPLE 4

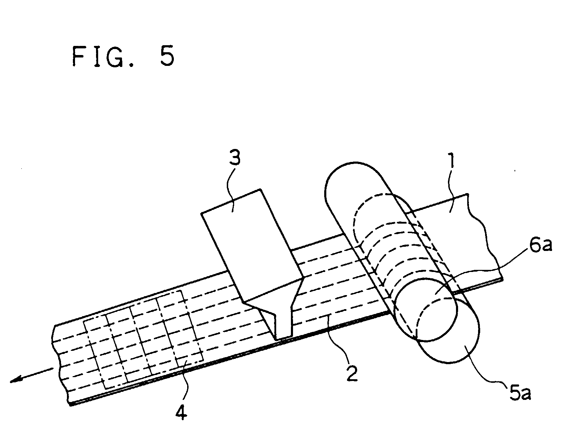

The same belt-like porous nickel substrate as that of Example 1 and the same prescription of the paste as that of Example 1 were employed in this example. And, as shown in FIG. 5, a plurality of grooves 2 having a depth of about 0.3 mm and a width of about 1 mm were provided on one face (bottom side) of the above-mentioned porous nickel substrate along its lengthwise direction. As shown in FIG. 5, the grooves were actually provided by transferring the substrate between a ribbed roller 5a provided on one face (bottom side) of the substrate and a follower roller 6a provided on the other face (top side) of the substrate, respectively, and by pressing the substrate 1 with both rollers from both sides. Then, in the same manner as that in Example 1, the paste was allowed to spout out through the nozzle 3 onto the other face (top side) of the porous substrate 1 to be filled into the spaces of the substrate.

Except for the provision of the grooves, the procedure of Example 1 was generally followed in producing an electrode plate. This was named electrode "c" of the present invention. On one face of the electrode "c", there were provided five grooves 2 at equivalent intervals.

Another battery as shown in FIG. 6 was configured by employing this electrode "c" as its positive electrode, a known separator and a negative electrode of metal hydride electrode, and by following the same procedure as that of Example 1. This was named Battery C. In Battery C, the grooves 2 in the electrode "c" are perpendicularly disposed.

1,000 examples of Battery C and 1,000 examples of Battery B as disclosed in Example 1 and provided as comparisons were measured for their dispersions in the discharge capacity. From the measurements, it was found that a mode of the dispersions in the discharge capacity of Batteries C and B was comparable to that obtained with the above-mentioned Batteries A and B, respectively.

It is believed that Battery C in accordance with this example can reduce the dispersion in the discharge capacity resulting from the dispersion in the amount of the filled paste as compared with Battery B, because the electrode "c" was filled with the paste from one face of the porous metal substrate and the paste did not reach the other face of the porous metal substrate, whereas the electrode "b" was filled with the paste from both faces of the porous metal substrate.

Since Battery C in accordance with this example is provided with the grooves perpendicular to one face of the positive electrode, these grooves serve as a passageway for exhausting oxygen gas which may generate at the time of overcharging and aid absorption of the gas at the negative electrodes. It is possible to substitute cut-lines for the above-mentioned grooves to secure the passageway for exhausting oxygen gas.

In the previous examples, the descriptions are limited to the use of the foamed nickel as the porous metal substrate; it is needless to say that the technical advantages similar to those with the foamed nickel can also be obtained if a nonwoven fabric of nickel fibers and a sintered plaque of nickel powder without skeletal structure are employed, as far as these substrates have the three-dimensional communicating spaces.

As described previously, in the case of employing the electrode in accordance with the present invention or the electrode obtained by the fabricating method in accordance with the present invention, it is possible to reduce the dispersion in the discharge capacity due to the dispersion in the actual filled amount of the active material and to ensure a favorable conductive network throughout the electrode, thereby to provide a storage battery having a high capacity and excellent reliability.

Although the present invention has been described in terms of the presently preferred embodiments, it is to be understood that such disclosure is not to be interpreted as limiting.

## Claims

1. An electrode for a battery, comprising:
a sheet of porous metal substrate (1) having three-dimensional communicating spaces and a first principal face and a second principal face;
wherein said substrate has a higher porosity layer provided by most of said spaces and including said first principal face and a lower porosity layer provided by the remaining spaces and including said second principal face;
said lower porosity layer has a smaller thickness than said higher porosity layer;
an active material substantially fills said spaces of said higher porosity layer; and
said active material is not present at said second principal face of said lower porosity layer.

2. The electrode for a battery in accordance with claim 1, wherein said lower porosity layer contains substantially none of said active material and the proportion of metal in said lower porosity layer is larger than that of said higher porosity layer.

3. The electrode for a battery in accordance with claim 1 or 2, wherein said porous metal substrate is a foamed nickel.

4. The electrode for a battery in accordance with claim 1 or 2, wherein said porous metal substrate is a nonwoven fabric of nickel fibres.

5. The electrode for a battery in accordance with claim 1 or 2, wherein said porous metal substrate is a sintered plaque of nickel powder.

6. The electrode for a battery in accordance with any one of claims 1 to 5, wherein said active material is nickel hydroxide.

7. The electrode for a battery in accordance with any one of claims 1 to 6, wherein said sheet of porous metal substrate (1) has a plurality of parallel grooves (2) provided in said second principal face.

8. A method of fabricating an electrode for a battery, comprising the steps of:
providing a sheet or plate-like porous metal substrate (1) having three-dimensional communicating spaces, a first principal face and a second principal face;
positioning a nozzle (3) so as to directly face said first principal face of said porous metal substrate;
directing an active material into said three-dimensional communicating spaces of said porous metal substrate by allowing said active material to discharge from said nozzle while relatively moving one of said substrate and said nozzle with respect to the other;
regulating the discharging operation so that said active material penetrates said spaces but does not reach said second principal face of said porous metal substrate; and
pressing said porous metal substrate containing said active material so as to reduce its thickness.

9. The method of fabricating an electrode for a battery in accordance with claim 8, wherein:
said porous metal substrate is belt-like;
the relative movement between said substrate and said nozzle is produced by driving said belt-like porous metal substrate; and
said active material is a pasty mixture.

10. The method of fabricating an electrode for a battery in accordance with claim 9, wherein the distance between said porous metal substrate and said nozzle is maintained at 1.0 mm or less.

11. The method of fabricating an electrode for a battery in accordance with claim 9, wherein said porous metal substrate (1) has a plurality of grooves or cut-lines (2) which extend in the longitudinal direction of said second principal face of said belt-like porous metal substrate.

12. The method of fabricating an electrode for a battery in accordance with claim 9, 10 or 11, wherein said pasty mixture contains water as a dispersing medium at a proportion of 20 - 30% by weight of the whole pasty mixture.

## Patentansprüche

1. Elektrode für eine Batterie, aufweisend:
ein Blatt oder Blech aus porösem Metallsubstrat (1) mit dreidimensionalen miteinander kommunizierenden Räumen sowie einer ersten Hauptfläche und einer zweiten Hauptfläche, in der
das Substrat eine Schicht mit höherer Porosität, die mit den meisten der Räume versehen ist und die erste Hauptfläche einschließt, sowie eine Schicht geringerer Porosität, die mit den restlichen Räumen versehen ist und die zweite Hauptfläche einschließt, aufweist,
die Schicht geringerer Porosität eine geringere Dicke aufweist als die Schicht höherer Porosität,
ein aktives Material im wesentlichen die Räume der Schicht höherer Porosität füllt, und
das aktive Material nicht an der zweiten Hauptfläche der Schicht geringerer Porosität vorliegt.

2. Elektrode für eine Batterie nach Anspruch 1, in der die Schicht geringerer Porosität im wesentlichen keines des aktiven Materials enthält und der Metallanteil in der Schicht geringerer Porosität größer ist als derjenige in der Schicht höherer Porosität.

3. Elektrode für eine Batterie nach Anspruch 1 oder 2, in der das poröse Metallsubstrat ein schaumförmiges oder aufgeschäumtes Nickel ist.

4. Elektrode für eine Batterie nach Anspruch 1 oder 2, in der das poröse Metallsubstrat ein Nonwoven-Stoff bzw. Vliesstoff aus Nickelfasern ist.

5. Elektrode für eine Batterie nach Anspruch 1 oder 2, in der das poröse Metallsubstrat eine gesinterte Platte oder sonstiges Stück aus Nickelpulver ist.

6. Elektrode für eine Batterie nach einem der Ansprüche 1 bis 5, in der das aktive Material Nickelhydroxid ist.

7. Elektrode für eine Batterie nach einem der Ansprüche 1 bis 6, in der das Blatt oder Blech aus porösem Metallsubstrat (1) eine Vielzahl von parallelen Nuten (2), die in der zweiten Hauptfläche vorgesehen sind, aufweist.

8. Verfahren zum Herstellen einer Elektrode für eine Batterie, aufweisend folgende Schritte:
Vorsehen eines blatt-, blech- oder plattenartigen porösen Metallsubstrats (1) mit dreidimensionalen miteinander kommunizierenden Räumen, einer ersten Hauptfläche und einer zweiten Hauptfläche,
Positionieren einer Düse (3) derart, daß sie der ersten Hauptfläche des porösen Metallsubstrats direkt gegenüberliegt,
Lenken eines aktiven Materials in die dreidimensionalen miteinander kommunizierenden Räume des porösen Metallsubstrats durch Zulassen des Entladens des aktiven Materials aus der Düse unter Bewegung des Substrats und der Düse relativ zueinander,
Regulieren des Entladevorgangs derart, daß das aktive Material in die Räume eindringt bzw. diese durchdringt, jedoch nicht zur zweiten Hauptfläche des porösen Metallsubstrats gelangt, und
Pressen des porösen Metallsubstrats, das das aktive Material enthält derart, daß dessen Dicke verringert wird.

9. Verfahren zur Herstellung einer Elektrode für eine Batterie nach Anspruch 8, in dem
das poröse Metallsubstrat bandartig ist,
die Bewegung des Substrats relativ zu der Düse durch Antreiben des bandartigen porösen Metallsubstrats erfolgt, und
das aktive Material ein pastöses Gemisch ist.

10. Verfahren zur Herstellung einer Elektrode für eine Batterie nach Anspruch 9, in dem der Abstand zwischen dem porösen Metallsubstrat und der Düse auf 1,0 mm oder weniger gehalten wird.

11. Verfahren zur Herstellung einer Elektrode für eine Batterie nach Anspruch 9, in dem das poröse Metallsubstrat (1) eine Vielzahl von Nuten oder Schnittlinien (2) aufweist, die sich in Längsrichtung der zweiten Hauptfläche des bandartigen porösen Metallsubstrats erstrecken.

12. Verfahren zur Herstellung einer Elektrode für eine Batterie nach Anspruch 9, 10 oder 11, in dem das pastöse Gemisch Wasser als Dispergator in einem Verhältnis von 20-30 Gewichtsprozent des gesamten pastösen Gemischs enthält.

## Revendications

1. Electrode destinée à une batterie, comprenant :
une feuille de substrat poreux en métal 1 possédant des espaces communicants à trois dimensions et une première face principale ainsi qu'une seconde face principale ;
dans laquelle ledit substrat possède une couche ayant une porosité plus élevée qui est pourvue de la plupart desdits espaces et comprenant ladite première face principale et une couche ayant une porosité plus faible créée par les espaces restants et incluant ladite seconde face principale ;
ladite couche ayant une porosité plus faible a une épaisseur plus faible que ladite couche ayant une porosité plus élevée ;
un matériau actif remplit en grande partie lesdits espaces de ladite couche ayant une porosité plus élevée ; et
ledit matériau actif n'est pas présent au niveau de ladite seconde face principale de ladite couche ayant une porosité plus faible.

2. Electrode destinée à une batterie selon la revendication 1, dans laquelle ladite couche ayant une porosité plus faible ne contient sensiblement pas dudit matériau actif et la proportion de métal dans ladite couche ayant une porosité plus faible est plus grande que celle de ladite couche ayant une porosité plus élevée.

3. Electrode destinée à une batterie selon la revendication 1 ou 2, dans laquelle ledit substrat poreux en métal est du nickel transformé en mousse.

4. Electrode destinée à une batterie selon la revendication 1 ou 2, dans laquelle ledit substrat poreux en métal est une étoffe de fibres de nickel non tissée.

5. Electrode destinée à une batterie selon la revendication 1 ou 2, dans laquelle ledit substrat poreux en métal est une plaque de poudre de nickel frittée.

6. Electrode destinée à une batterie selon l'une quelconque des revendications 1 à 5, dans laquelle ledit matériau actif est de l'hydroxyde de nickel.

7. Electrode destinée à une batterie selon l'une quelconque des revendications de 1 à 6, dans laquelle ladite feuille de substrat poreux en métal (1) possède une pluralité de rainures parallèles (2) prévues dans ladite seconde face principale.

8. Procédé de fabrication d'une électrode destinée à une batterie, comprenant les étapes :
d'utilisation d'une feuille ou d'un substrat poreux en métal du type plaque (1) possédant des espaces communicants à trois dimensions, une première face principale et une seconde face principale ;
de positionnement d'une buse (3) de manière à ce qu'elle soit directement en face de ladite première face principale dudit substrat poreux en métal ;
de conduite d'un matériau actif dans lesdits espaces communicants à trois dimensions dudit substrat poreux en métal permettant audit matériau actif de se décharger par ladite buse tout en déplaçant l'un par rapport à l'autre soit ledit substrat ou soit ladite buse ;
de régulation de l'opération de décharge de telle façon que ledit matériau actif pénètre dans lesdits espaces mais n'atteint pas ladite seconde face principale dudit substrat poreux en métal ; et
de compression dudit substrat poreux en métal contenant ledit matériau actif de manière à réduire son épaisseur.

9. Procédé de fabrication d'une électrode destinée à une batterie selon la revendication 8, dans lequel :
ledit substrat poreux en métal est du type bande ;
le déplacement relatif entre ledit substrat et ladite buse est réalisé par entraînement dudit substrat poreux en métal du type bande ; et
ledit matériau actif est un mélange pâteux.

10. Procédé de fabrication d'une électrode destinée à une batterie selon la revendication 9, dans lequel la distance entre ledit substrat poreux en métal et ladite buse est maintenue à 1,0 mm ou moins.

11. Procédé de fabrication d'une électrode destinée à une batterie selon la revendication 9, dans lequel ledit substrat poreux en métal (1) possède une pluralité de rainures ou de lignes découpées (2) qui s'étendent dans la direction longitudinale de ladite seconde face principale dudit substrat poreux en métal du type bande.

12. Procédé de fabrication d'une électrode destinée à une batterie selon la revendication 9, 10 ou 11, dans lequel ledit mélange pâteux contient de l'eau en tant que moyen de dispersion dans une proportion allant de 20 à 30% en poids de la totalité du mélange pâteux.
